# EUROPEAN PATENT APPLICATION

(11) **EP 4 819 331 A1**
(43) Date of publication of application: **07.10.2026**
(21) Application number: 25877708.5
(22) Date of filing: 24.09.2025
(51) Int. Cl.: H01M 50/244, H01M 10/6556, H01M 10/6551, H01M 10/613, H01M 50/289, H01M 50/502, H01M 50/204

(54) **SUB-PACK AND BATTERY PACK COMPRISING SAME**

(30) Priority: 11.10.2024 KR 20240138865
(71) Applicant: LG Energy Solution, Ltd., Seoul 07335 (KR)
(72) Inventor: LEE, Sang Ouk, Daejeon 34122 (KR)
(74) Representative: Plasseraud IP
(86) International application number: PCT/KR2025/014981
(87) International publication number: WO 2026/079736

(57) **Abstract**

Disclosed herein is a sub-pack including a heat sink, side frames formed on both sides of the heat sink integrally with the heat sink, a plurality of cooling passages formed inside the heat sink spaced apart in parallel with a direction in which the side frames extend, a plurality of refrigerant ports provided on both side surfaces of the heat sink to communicate with each of the cooling passages, and at least one battery assembly mounted on an upper surface of the heat sink, and the refrigerant ports may include protruding plug ports disposed on one side of the heat sink and recessed socket ports having a shape complementary to the plug ports disposed on the other side of the heat sink.

## Description

### [Technical Field]

The present disclosure relates to a battery pack with improved maintenance and repair performance by including sub-packs that can be mutually separated and fastened.

This application claims the benefit of priority from Korean Patent Application No. 10-2024-0138865, filed on October 11, 2024, the entire contents disclosed therein are incorporated by reference into this disclosure.

### [Background]

Various attempts have been made to increase the space utilization rate of battery packs, and as one of those methods, a battery pack having a Cell-To-Pack structure has been proposed. The Cell-To-Pack structure assembles a plurality of batteries directly into a battery pack by bundling them with minimal structures without a modularized structure that contains the plurality of batteries in a housing, and has the advantage of improving the space utilization rate of the battery pack by reducing a large number of structures.

In addition, by omitting a separate module housing, a thermal resin is directly interposed between the bottom surface of a battery assembly where batteries are exposed and a base plate of a pack case, thereby promoting conductive heat dissipation of the battery assembly and more firmly fixing the battery assembly through curing of the thermal resin. As such, recent battery packs are accompanied by simplified designs that reduce the number of component types, and through this, the supply capacity of the battery pack is improved, and the cooling structure is simplified to achieve an increase in cooling effect that can respond to heat generation during rapid charging.

The structure of a battery pack that fixes a battery assembly even more firmly through curing of the thermal resin has many advantages in terms of the Cell-To-Pack structure in that it improves the space utilization rate of the battery pack by assembling directly into the battery pack without a structure that modularizes a plurality of batteries, and the heat dissipation performance by heat conduction is improved compared to a structure in which a module housing is additionally interposed. However, there are disadvantages in terms of maintenance and repair of the battery pack. That is, such a Cell-To-Pack structure makes it very difficult to disassemble an assembled battery pack in units of battery assemblies. For example, a structure that fixes the bottom surface of a battery assembly through curing of the thermal resin can cause damage to batteries bonded to the thermal resin when removing the battery assembly, which can lead to quite dangerous results such as leakage of electrolyte.

In this regard, even when a problem occurs only in any one battery cell and/or battery assembly in the battery pack, there is a significant need for development of a battery pack having a Cell-To-Pack structure that can utilize the battery pack until the designed lifespan without discarding the expensive battery pack by enabling minimal maintenance and repair through replacement of the battery pack including the corresponding battery assembly.

### [Summary]

### [Technical Problem]

An object of the present disclosure is to provide a battery pack composed of a sub-pack structure that can easily perform replacement of a battery assembly in which a problem has occurred in an assembled battery pack.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a sub-pack, and according to one embodiment, includes a heat sink, side frames formed on both sides of the heat sink integrally with the heat sink, a plurality of cooling passages formed inside the heat sink spaced apart in parallel with a direction in which the side frames extend, a plurality of refrigerant ports provided on both side surfaces of the heat sink to communicate with each of the cooling passages, and at least one battery assembly mounted on an upper surface of the heat sink, wherein the refrigerant ports may include protruding plug ports disposed on one side of the heat sink and recessed socket ports having a shape complementary to the plug ports disposed on the other side of the heat sink.

The battery assembly may be fixed to the heat sink via a thermal resin applied on the upper surface of the heat sink.

In one embodiment, the battery assembly includes a plurality of battery cells, and the battery cells may be directly fixed to the heat sink by the thermal resin.

A cross beam extending in a direction parallel to the side frames may be provided on the upper surface of the heat sink.

The battery assemblies may be respectively mounted on both sides with the cross beam interposed therebetween.

In one embodiment, the battery assemblies are mounted one each on both sides with the cross beam interposed therebetween, and the two battery assemblies may be arranged such that respective busbar frames face each other.

Meanwhile, the present disclosure includes a plurality of sub-packs having the above configuration, wherein the plurality of sub-packs are aligned in a direction in which the refrigerant ports face each other, and in adjacent sub-packs, a plug port of any one sub-pack may be inserted into and coupled to a socket port of another sub-pack.

The battery pack includes a pair of end frames coupled to outermost sub-packs in a connection direction among the plurality of interconnected sub-packs, and the pair of end frames may each be provided with an inlet port or an outlet port communicating with the refrigerant ports of the outermost sub-packs.

The refrigerant ports may be provided with sealing members for sealing between the plug ports and the socket ports.

Coupling between the plurality of sub-packs may be maintained by a binding member capable of fastening and separation.

The binding member may be fastened to the side frames provided on each of the plurality of sub-packs, or to the side frames and the end frames.

In one embodiment, the binding member may be fastened to the side frames, or to the side frames and the end frames via a cover member covering the plurality of sub-packs.

### [Advantageous Effects]

In the sub-pack and battery pack of the present disclosure having the above configuration, a plurality of sub-packs can form one battery pack by being connected via refrigerant ports.

As such, since the battery pack is composed of a plurality of sub-packs that can be mutually separated, even when a problem occurs only in any one battery cell and/or battery assembly in the battery pack, the battery pack can be utilized until the designed lifespan without discarding the expensive battery pack through minimal maintenance and repair of replacing the sub-pack including the corresponding battery assembly, and such configuration of sub-packs can be effectively applied to a battery pack having a Cell-To-Pack structure.

However, the technical effects that can be obtained through the present disclosure are not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a perspective view of a sub-pack according to one embodiment of the present disclosure.
FIG. 2 is an exploded perspective view of the sub-pack of FIG. 1.
FIG. 3 is a perspective view of the sub-pack of FIG. 1 viewed from another direction.
FIG. 4 is a diagram illustrating one embodiment of a battery pack composed of a plurality of sub-packs.
FIG. 5 is an exploded perspective view of the battery pack of FIG. 4.
FIG. 6 is a diagram illustrating one embodiment of detachably fastening a plurality of sub-packs.
FIG. 7 is a diagram illustrating another embodiment of detachably fastening a plurality of sub-packs.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The sub-pack provided by the present disclosure, in one embodiment, includes a heat sink, side frames formed on both sides of the heat sink integrally with the heat sink, a plurality of cooling passages formed inside the heat sink spaced apart in parallel with a direction in which the side frames extend, a plurality of refrigerant ports provided on both side surfaces of the heat sink to communicate with each of the cooling passages, and at least one battery assembly mounted on an upper surface of the heat sink, wherein the refrigerant ports may include protruding plug ports disposed on one side of the heat sink and recessed socket ports having a shape complementary to the plug ports disposed on the other side of the heat sink.

A plurality of sub-packs having the above configuration can form one battery pack by being connected via the refrigerant ports. As such, since the battery pack is composed of a plurality of sub-packs that can be mutually separated, even when a problem occurs only in any one battery cell and/or battery assembly in the battery pack, the battery pack can be utilized until the designed lifespan without discarding the expensive battery pack through minimal maintenance and repair of replacing the sub-pack including the corresponding battery assembly, and such configuration of sub-packs can be effectively applied to a battery pack having a Cell-To-Pack structure.

### [Detailed Description]

Hereinafter, specific embodiments of a sub-pack 100 and a battery pack 10 including same according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

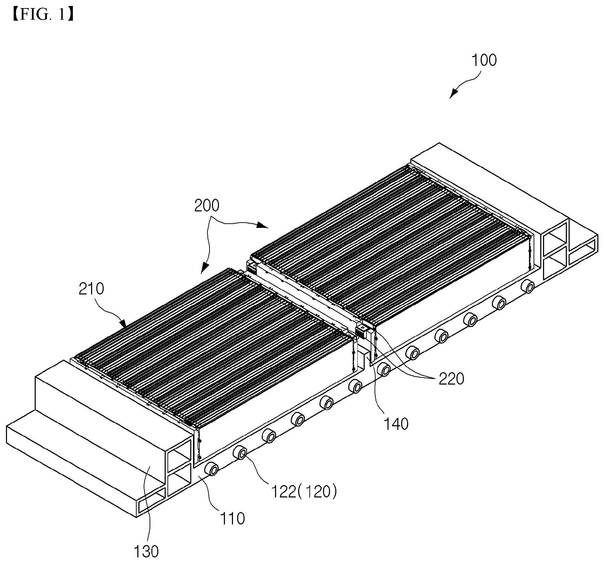

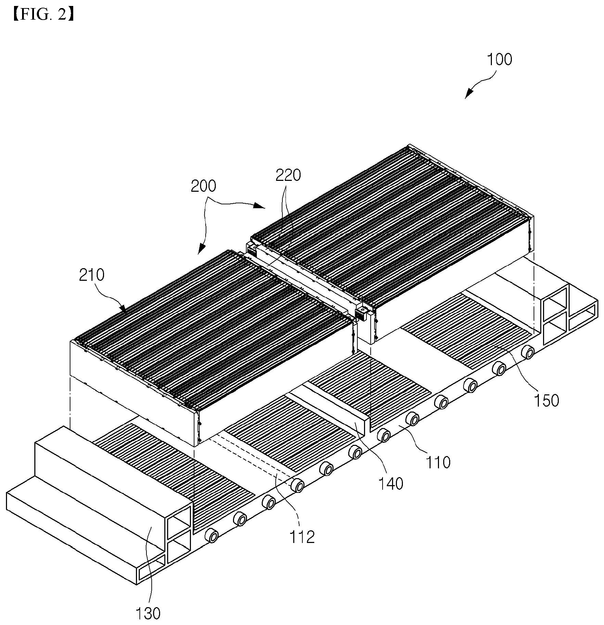

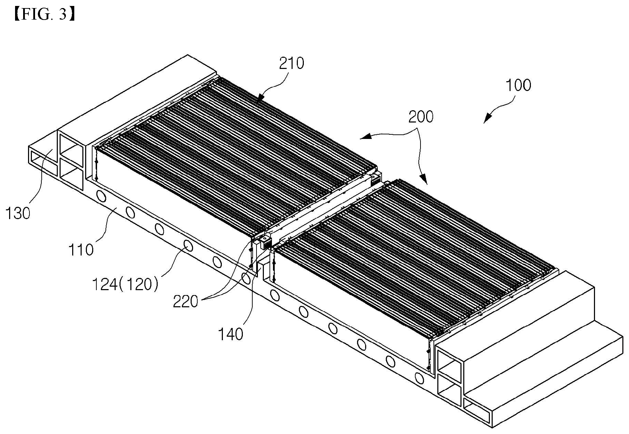

FIG. 1 is a perspective view of a sub-pack 100 according to one embodiment of the present disclosure, FIG. 2 is an exploded perspective view of the sub-pack 100 of FIG. 1, and FIG. 3 is a perspective view of the sub-pack 100 of FIG. 1 viewed from another direction.

The sub-pack 100 of the present disclosure refers to a sub-unit forming one complete battery pack 10. Each sub-pack 100 forming one battery pack 10 has the same structure, and by changing the number of sub-packs 100 coupled to each other, battery packs 10 of various capacities and outputs can be configured.

Referring to FIG. 1 to FIG. 3, the sub-pack 100 of the present disclosure includes a heat sink 110 and side frames 130 integrally formed on both sides of the heat sink 110. In addition, a plurality of cooling passages 112 are formed inside the heat sink 110 spaced apart in parallel with a direction in which the side frames 130 extend. Inside the heat sink 110, each of the cooling passages 112 may be separated from each other without communicating.

In consideration of productivity, the heat sink 110, the side frames 130, and the plurality of cooling passages 112 may be integrally formed. For example, the heat sink 110, the side frames 130, and the plurality of cooling passages 112 may be integrally molded using extrusion molding or casting techniques such as die casting. FIG. 1 to FIG. 3 exemplarily illustrate the heat sink 110 of such an integral structure. However, this is one embodiment, and the basic frame structure of the sub-pack 100 can be made in various ways, such as bonding a separate side frame to a brazing-type heat sink.

In addition, on both side surfaces of the heat sink 110, a plurality of refrigerant ports 120 communicating with each of the cooling passages 112 are provided. A pair of refrigerant ports 120 provided at both ends of one cooling passage 112 may form a male-female configuration. Specifically, as illustrated in FIG. 1 and FIG. 3, the pair of refrigerant ports 120 comprises protruding plug ports 122 disposed on one side of the heat sink 110 and recessed socket ports 124 disposed on the other side of the heat sink 110 and having a shape complementary to the plug ports 122. As such, since the pair of refrigerant ports 120 provided at both ends of one cooling passage 112 form a male-female configuration capable of being mutually coupled, when interconnecting a plurality of sub-packs 100, alignment accuracy is improved, and the cooling passages 112 of each sub-pack 100 can be closely connected.

The sub-pack 100 includes at least one battery assembly 200 mounted on an upper surface of the heat sink 110. The sub-pack 100 may be completed in a state in which one or more battery assemblies 200 are mounted. In one embodiment, the battery assembly 200 may be fixed to the heat sink 110 via a thermal resin 150 applied on the upper surface of the heat sink 110.

The battery assembly 200 may be suitable for a Cell-To-Pack structure. For example, the battery assembly 200 may have a structure in which a plurality of battery cells 210 are at least partially exposed on a bottom surface thereof by omitting a separate module housing. In the case of the battery assembly 200 suitable for such a Cell-To-Pack structure, the plurality of battery cells 210 may be directly fixed to the heat sink 110 by the thermal resin 150.

Meanwhile, on the upper surface of the heat sink 110, a cross beam 140 extending in a direction parallel to the side frames 130 may be provided. The battery assemblies 200 may be respectively mounted on both sides with the cross beam 140 interposed therebetween. When a plurality of battery assemblies 200 are mounted on the heat sink 110, the cross beam 140 functions as a separation wall to divide adjacent battery assemblies 200, and also serves to increase the structural rigidity of the sub-pack 100.

As in the embodiment illustrated in FIG. 1 to FIG. 3, one battery assembly 200 each is mounted on both sides with the cross beam 140 interposed therebetween, and the two battery assemblies 200 may be arranged such that respective busbar frames 220 face each other. The busbar frame 220 electrically connects the plurality of battery cells 210 included in each battery assembly 200, and also serves as a terminal for extending electrical connection to the outside. By arranging the busbar frames 220 of the battery assemblies 200 to face each other with the cross beam 140 interposed therebetween, electrical connection between the battery assemblies 200 is facilitated. In addition, it is also easy to utilize the cross beam 140 as an electrical connection passage.

### [second embodiment]

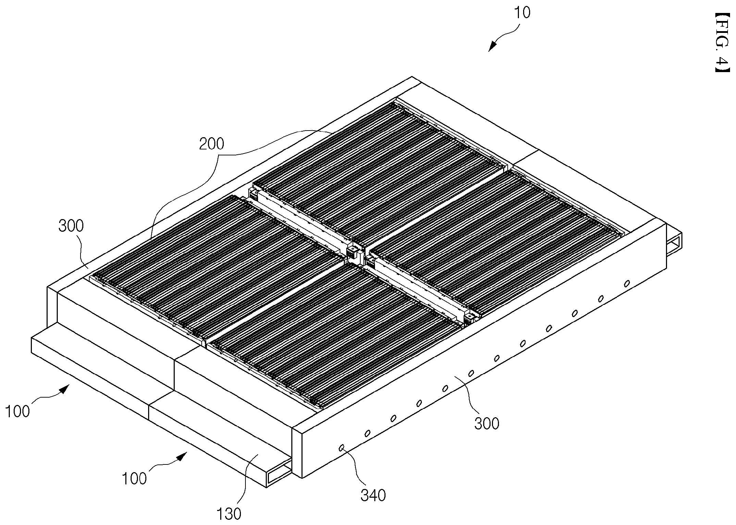

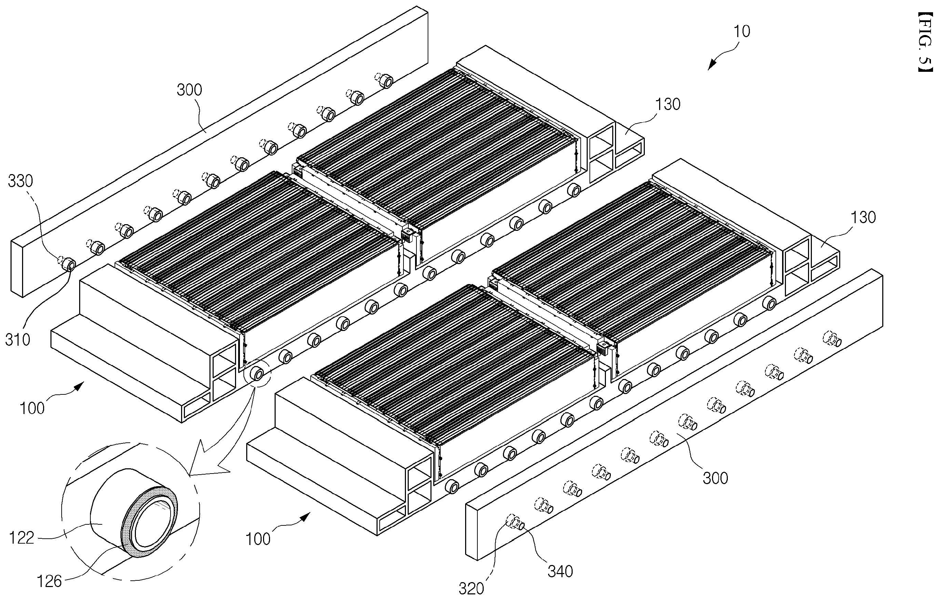

FIG. 4 is a diagram illustrating one embodiment of a battery pack 10 composed of a plurality of sub-packs 100, and FIG. 5 is an exploded perspective view of the battery pack 10 of FIG. 4.

The battery pack 10 according to one embodiment of the present disclosure, as shown in FIG. 4 and FIG. 5, includes a plurality of the sub-packs 100 described in the first embodiment. The plurality of sub-packs 100 are aligned in a row in a direction in which the refrigerant ports 120 face each other, and adjacent sub-packs 100 may be coupled in a structure in which a plug port 122 of any one sub-pack 100 is inserted into a socket port 124 of another sub-pack 100.

As described above, in the battery pack 10 of the present disclosure, when the plurality of sub-packs 100 are interconnected through male-female coupling of the plug ports 122 and the socket ports 124 between adjacent sub-packs 100, alignment accuracy is improved, and the cooling passages 112 of each sub-pack 100 can be closely connected. For a closer connection of the cooling passages 112, each refrigerant port 120 may be provided with a sealing member 126 for sealing between the plug port 122 and the socket port 124.

The number of connections of such sub-packs 100 is not particularly limited. Therefore, by adjusting the number of connections of the sub-packs 100 and/or an electrical connection method, various requirements for capacity and output of the battery pack 10 can be satisfied.

The battery pack 10 may include a pair of end frames 300 coupled to outermost sub-packs 100 in a connection direction among the plurality of interconnected sub-packs 100. The end frames 300 may be coupled to side surfaces of the outermost sub-packs 100 while also being coupled to adjacent side frames 130. In addition, the end frames 300 may be detachably fastened to the sub-packs 100.

The pair of end frames 300 may each be provided with an inlet port 310 or an outlet port 320 communicating with the refrigerant ports 120 of the outermost sub-packs 100. The inlet port 310 and the outlet port 320 of the end frames 300 may be coupled to the refrigerant ports 120 of the outermost sub-packs 100 in a structure similar to the male-female coupling of the plug ports 122 and the socket ports 124. The inlet port 310 and the outlet port 320 are connection ports for inflow and outflow of refrigerant, and the arrangement of the inlet port 310 and the outlet port 320 may be arranged opposite to that shown in the drawings depending on the design of a flow path of the refrigerant.

In addition, a refrigerant inlet 330 and a refrigerant outlet 340 provided on each end frame 300 may be provided in an appropriate number. For example, as shown in FIG. 4 and FIG. 5, the refrigerant inlet 330 and the refrigerant outlet 340 may each be provided in a number corresponding to the refrigerant ports 120 of the sub-packs 100. Alternatively, the end frames 300 may be made in a hollow structure, and a structure in which a plurality of inlet ports 310 and outlet ports 320 communicate with a smaller number of refrigerant inlets 330 and refrigerant outlets 340 through a hollow portion may also be made.

Coupling between the plurality of sub-packs 100 may be maintained by a binding member 400 capable of fastening and separation. The connection between the sub-packs 100 becomes more secure by the binding member 400, and in particular, the binding member 400 may employ fastening and separable means, for example, screw coupling members such as bolts and nuts, reusable binding means such as clamps, or removable binding means such as rivets.

Since the plurality of sub-packs 100 are maintained in a connected state by the male-female coupling of the plug ports 122 and the socket ports 124 and the binding member 400 capable of fastening and separation, the connected state can be released and each sub-pack 100 can be separated again if needed. This means that replacement of any sub-pack 100 is possible. In this regard, in the battery pack 10 of the present disclosure, even if a plurality of battery cells 210 are directly fixed to the heat sink 110 by the thermal resin 150 by a Cell-To-Pack structure, the battery pack 10 can be utilized until the designed lifespan without discarding the expensive battery pack 10 through replacement of the sub-pack 100 in which a problem has occurred. That is, the battery pack 10 of the present disclosure is greatly improved in ease of maintenance and repair in terms of after-sales service.

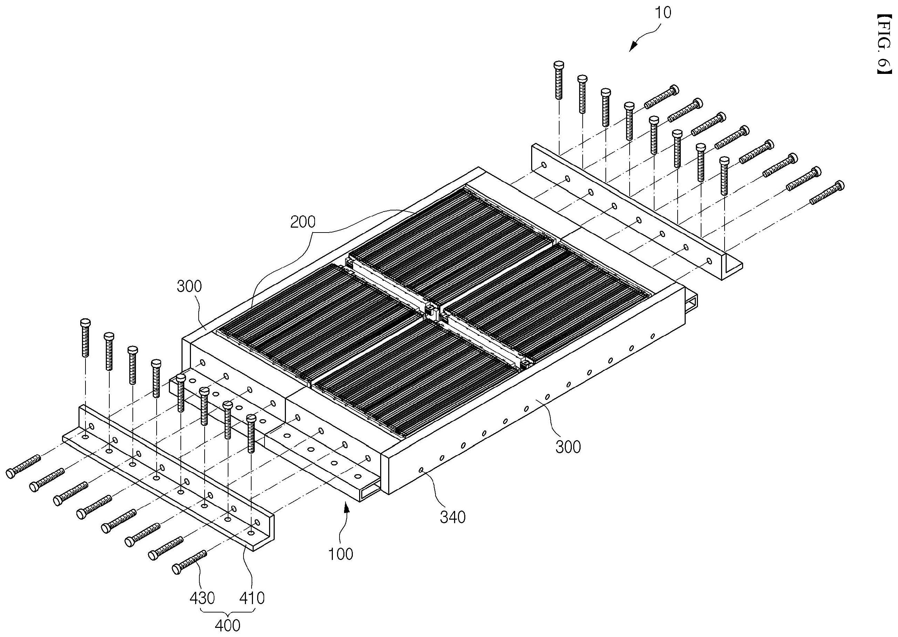

FIG. 6 is a diagram illustrating one embodiment of detachably fastening a plurality of sub-packs 100. In the exemplary embodiment of FIG. 6, the binding member 400 in the form of a bent plate 410 is detachably fastened with a plurality of bolts 430 to the side frames 130 provided on each of the plurality of interconnected sub-packs 100, or to the side frames 130 and the end frames 300.

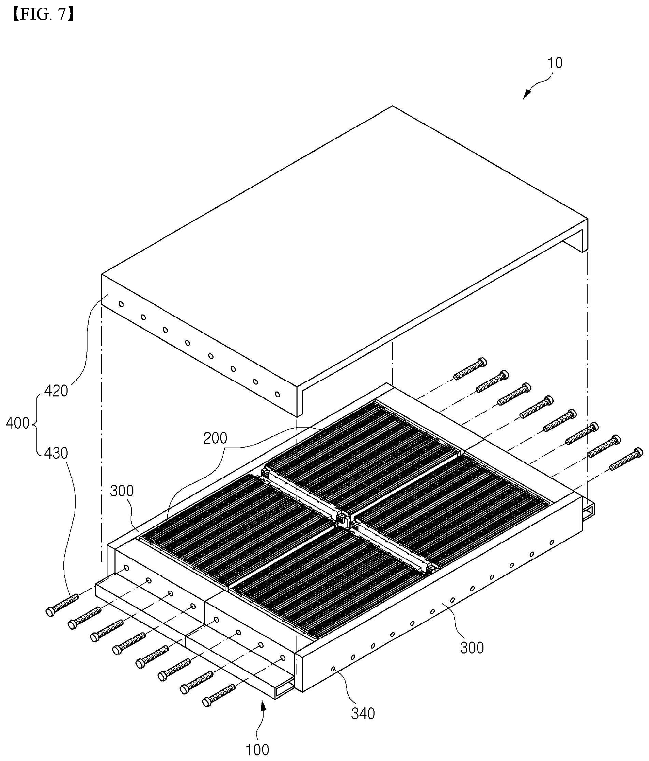

FIG. 7 is a diagram illustrating another embodiment of detachably fastening a plurality of sub-packs 100. In the exemplary embodiment of FIG. 7, the binding member 400 is detachably fastened with a plurality of bolts 430 to the side frames 130, or to the side frames 130 and the end frames 300 via a cover member 420 covering the entire plurality of sub-packs 100. By completing the sealing of the battery pack by the cover member 420 and simultaneously structurally suppressing the plurality of interconnected sub-packs 100 from being separated from all directions, the structure of the battery pack 10 can be maintained more stably.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that the disclosure covers various equivalents, modifications, and substitutions at the time of filing of this application.

### [Description of Reference Numerals]

10: battery pack
100: sub-pack
110: heat sink
112: cooling passage
120: refrigerant port
122: plug port
124: socket port
126: sealing member
130: side frame
140: cross beam
150: thermal resin
200: battery assembly
210: battery cell
220: busbar frame
300: end frame
310: inlet port
320: outlet port
330: refrigerant inlet
340: refrigerant outlet
400: binding member
410: bent plate
420: cover member
430: bolt

## Claims

1. A sub-pack, comprising:
a heat sink;
side frames formed on both sides of the heat sink integrally with the heat sink;
a plurality of cooling passages formed inside the heat sink, spaced apart with the side frames and in parallel with a direction in which the side frames extend;
a plurality of refrigerant ports provided on both side surfaces of the heat sink to communicate with each of the cooling passages; and
at least one battery assembly mounted on an upper surface of the heat sink;
wherein the refrigerant ports comprise protruding plug ports disposed on one side of the heat sink and recessed socket ports having a shape complementary to the plug ports disposed on the other side of the heat sink.

2. The sub-pack of claim 1, wherein the battery assembly is fixed to the heat sink via a thermal resin applied on the upper surface of the heat sink.

3. The sub-pack of claim 2, wherein the battery assembly comprises a plurality of battery cells, and the battery cells are directly fixed to the heat sink by the thermal resin.

4. The sub-pack of claim 1, wherein a cross beam extending in a direction parallel to the side frames is provided on the upper surface of the heat sink.

5. The sub-pack of claim 4, wherein the battery assemblies are respectively mounted on both sides with the cross beam interposed therebetween.

6. The sub-pack of claim 5, wherein the battery assemblies are mounted one each on both sides with the cross beam interposed therebetween, and
wherein the two battery assemblies are arranged such that respective busbar frames face each other.

7. A battery pack comprising a plurality of sub-packs of any one of claims 1 to 6,
wherein the plurality of sub-packs are aligned in a direction in which the refrigerant ports face each other, and
wherein in adjacent sub-packs, a plug port of one sub-pack is inserted into and coupled to a socket port of another sub-pack.

8. The battery pack of claim 7, wherein the battery pack comprises a pair of end frames coupled to outermost sub-packs in a connection direction among the plurality of interconnected sub-packs, and
wherein the pair of end frames each are provided with an inlet port or an outlet port communicating with the refrigerant ports of the outermost sub-packs.

9. The battery pack of claim 8, wherein the refrigerant ports are provided with a sealing member for sealing between the plug ports and the socket ports.

10. The battery pack of claim 8, wherein coupling between the plurality of sub-packs is maintained by a binding member capable of fastening and separation.

11. The battery pack of claim 10, wherein the binding member is fastened to the side frames provided on each of the plurality of sub-packs, or to the side frames and the end frames.

12. The battery pack of claim 11, wherein the binding member is fastened to the side frames, or to the side frames and the end frames via a cover member covering the plurality of sub-packs.
